# EUROPEAN PATENT APPLICATION

(11) **EP 3 769 835 A1**
(43) Date of publication of application: **27.01.2021**
(21) Application number: 19772157.4
(22) Date of filing: 22.03.2019
(51) Int. Cl.: B01D 53/50, B01D 53/18, B01D 53/78

(54) **FLUE GAS DESULFURIZATION DEVICE**

(30) Priority: 23.03.2018 JP 2018057122
(71) Applicant: Mitsubishi Hitachi Power Systems, Ltd., Yokohama-shi, Kanagawa 220-8401 (JP)
(72) Inventor: NARITA Yuki, Yokohama-shi, Kanagawa 220-8401 (JP); SHIMAZU Hiromichi, Yokohama-shi, Kanagawa 220-8401 (JP); KATAGAWA Atsushi, Yokohama-shi, Kanagawa 220-8401 (JP); INABA Norikazu, Yokohama-shi, Kanagawa 220-8401 (JP); HIGASHI Hideaki, Yokohama-shi, Kanagawa 220-8401 (JP)
(74) Representative: Hoffmann Eitle
(86) International application number: PCT/JP2019/012241
(87) International publication number: WO 2019/182147

(57) **Abstract**

Absorption liquid drained from an absorption tower tank 5 of an absorption tower 1 is transferred to flow into a slurry tank 9 by a first pump 8. A separation device 2 separates the absorption liquid transferred from the slurry tank 9 by a second pump 10 into gypsum and dehydration filtrate. Through a filtrate collection pipeline 20, a filtrate outlet 40 and a filtrate inlet 41 communicate with each other. A height above ground level Hc of the filtrate outlet 40 is higher than a height above ground level Ha of the filtrate inlet 41, and the filtrate collection pipeline 20 is arranged to allow the dehydration filtrate flowing out of the filtrate outlet 40 to flow down by gravity and flow into the filtrate inlet 41.

## Description

### TECHNICAL FIELD

The present invention relates to a flue gas desulfurization apparatus.

### BACKGROUND ART

Wet limestone-gypsum flue gas desulfurization apparatuses (hereinafter, referred to as flue gas desulfurization apparatuses) have been widely put into practical use as apparatuses that remove sulfur oxides from exhaust gas generated in thermal power plants and the like and containing the sulfur oxides. The flue gas desulfurization apparatus guides the generated exhaust gas to an absorption tower, absorbs and removes the sulfur oxides by bringing the exhaust gas into contact with absorption liquid, and collects gypsum as by-products.

Patent Literature 1 discloses a gypsum dehydration device that separates gypsum from absorption liquid. The absorption liquid pooled in an absorption tower circulation tank at a bottom portion of an absorption tower is transferred to the gypsum dehydration device and separated by the gypsum dehydration device into gypsum and dehydration filtrate, which is then transferred to a filtrate tank. The dehydration filtrate in the filtrate tank is suppliable to the absorption tower circulation tank of the absorption tower by a filtrate pump.

### CITATION LIST

### PATENT LITERATURE

Patent Literature 1: Japanese Patent Application Publication No. 2007-105679

### SUMMARY OF INVENTION

### TECHNICAL PROBLEM

The device disclosed in Patent Literature 1 is required to be provided with the filtrate tank for reserving the dehydration filtrate and the filtrate pump for transferring the dehydration filtrate from the filtrate tank to the absorption tower circulation tank. For this reason, it is difficult to achieve space-saving and reductions in initial cost and operation cost.

To address this, an object of the present invention is to provide a flue gas desulfurization apparatus that is capable of achieving space-saving and cost reduction.

### SOLUTION TO PROBLEM

In order to achieve the above-described object, a first aspect of the present invention is a flue gas desulfurization apparatus that removes sulfur oxides from exhaust gas containing the sulfur oxides, including: an absorption tower that absorbs the sulfur oxides in the exhaust gas by absorption liquid and reserves the resultant absorption liquid in an absorption tower tank; a slurry tank into which the absorption liquid drained from the absorption tower tank is transferred to flow by a first pump; a separation device that separates the absorption liquid transferred from the slurry tank by a second pump into gypsum and dehydration filtrate; and a filtrate collection pipeline through which a filtrate outlet of the separation device and a filtrate inlet of the absorption tower communicate with each other. A height above ground level of the filtrate outlet is higher than a height above ground level of the filtrate inlet, and the filtrate collection pipeline is arranged to allow the dehydration filtrate flowing out of the filtrate outlet to flow down by gravity and flow into the filtrate inlet.

A second aspect of the present invention is a flue gas desulfurization apparatus that removes sulfur oxides from exhaust gas containing the sulfur oxides, including: an absorption tower that absorbs the sulfur oxides in the exhaust gas by absorption liquid and reserves the resultant absorption liquid in an absorption tower tank; a slurry tank into which the absorption liquid drained from the absorption tower tank is transferred to flow by a first pump; a separation device that separates the absorption liquid transferred from the slurry tank by a second pump into gypsum and dehydration filtrate; a wastewater treatment facility that removes hazardous components in the dehydration filtrate; a filtrate collection pipeline through which a filtrate outlet of the separation device, a filtrate inlet of the absorption tower, and a filtrate inlet of the wastewater treatment facility communicate with each other; an absorption tower-side valve that is provided in a pathway in the filtrate collection pipeline toward the filtrate inlet of the absorption tower; and a wastewater treatment-side valve that is provided in a pathway in the filtrate collection pipeline toward the filtrate inlet of the wastewater treatment facility. A height above ground level of the filtrate outlet is higher than a height above ground level of the filtrate inlet of the absorption tower and a height above ground level of the filtrate inlet of the wastewater treatment facility, and the filtrate collection pipeline is arranged to allow the dehydration filtrate flowing out of the filtrate outlet to flow down by gravity and flow into the filtrate inlet of the absorption tower and the filtrate inlet of the wastewater treatment facility.

A third aspect of the present invention is a flue gas desulfurization apparatus that removes sulfur oxides from exhaust gas containing the sulfur oxides, including: an absorption tower that absorbs the sulfur oxides in the exhaust gas by absorption liquid and reserves the resultant absorption liquid in an absorption tower tank; a slurry tank into which the absorption liquid drained from the absorption tower tank is transferred to flow by a first pump; a gypsum hydrocyclone that separates the absorption liquid transferred from the slurry tank by a second pump into high solid content concentration liquid and low solid content concentration liquid; a separation device that separates the high solid content concentration liquid discharged from the gypsum hydrocyclone into gypsum and dehydration filtrate; a wastewater treatment facility that removes hazardous components in the dehydration filtrate; a filtrate collection pipeline through which a low solid content concentration-side filtrate outlet of the gypsum hydrocyclone, a filtrate outlet of the separation device, a filtrate inlet of the absorption tower, and a filtrate inlet of the wastewater treatment facility communicate with each other; an absorption tower-side valve that is provided in a pathway in the filtrate collection pipeline toward the filtrate inlet of the absorption tower; and a wastewater treatment-side valve that is provided in a pathway in the filtrate collection pipeline toward the filtrate inlet of the wastewater treatment facility. A height above ground level of the low solid content concentration-side filtrate outlet of the gypsum hydrocyclone and a height above ground level of the filtrate outlet of the separation device are higher than a height above ground level of the filtrate inlet of the absorption tower and a height above ground level of the filtrate inlet of the wastewater treatment facility, and the filtrate collection pipeline is arranged to allow the dehydration filtrate flowing out of the filtrate outlet of the separation device to flow down by gravity and flow into the filtrate inlet of the absorption tower and the filtrate inlet of the wastewater treatment facility, and to allow the dehydration filtrate flowing out of the low solid content concentration-side filtrate outlet of the gypsum hydrocyclone to flow down by gravity and flow into the filtrate inlet of the absorption tower and the filtrate inlet of the wastewater treatment facility.

In the above configuration, the dehydration filtrate flowing out of the filtrate outlet of the separation device flows down the filtrate collection pipeline and flows into the filtrate inlet of the absorption tower to be reserved in the absorption tower tank. Since the height above ground level of the filtrate outlet is higher than the height above ground level of the filtrate inlet, and the filtrate collection pipeline is arranged such that the dehydration filtrate flowing out of the filtrate outlet flows down by gravity and flows into the filtrate inlet, there is no need to provide a filtrate tank for reserving the dehydration filtrate and a filtrate pump for transferring the dehydration filtrate from the filtrate tank to the absorption tower tank, and it is possible to achieve space-saving and cost reduction.

Additionally, with the absorption tower tank serving as a reservoir tank of the dehydration filtrate, it is possible to adjust the water balance of the entire apparatus.

Moreover, since the filtrate collection pipeline is arranged to allow the dehydration filtrate flowing out of the filtrate outlet of the separation device to flow down by gravity and flow into the filtrate inlet of the absorption tower, it is required to set the height difference between the filtrate outlet of the separation device and the filtrate inlet of the absorption tower great, and the height difference for the transfer of the absorption liquid from the absorption tower to the separation device is accordingly increased. Since the absorption liquid is lifted up from a low position to a high position between the two positions having the increased height difference as described above, it is required to enlarge the pump for transferring the absorption liquid in order to stably transfer the absorption liquid to the separation device.

Regarding this point, in this embodiment, the slurry tank is provided at a height above ground level that is higher than the height above ground level of the filtrate inlet of the absorption tower and lower than the height above ground level of the absorption liquid inlet of the separation device to once lift up the absorption liquid from the absorption tower tank to the slurry tank by the first pump and then further lift up the absorption liquid from the slurry tank to the absorption liquid inlet of the separation device by the second pump. Thus, since the absorption liquid is lifted up gradually by arranging the slurry tank at the position higher than the filtrate inlet of the absorption tower, it is possible to stably transfer the absorption liquid to the separation device while inhibiting the enlargement of the first pump and the second pump even in the case where the height difference for the transfer of the absorption liquid from the absorption tower to the separation device is increased.

Furthermore, since the limestone tank reserving the limestone slurry is provided, the filtrate collection pipeline and the limestone tank communicate with each other by the limestone tank pipeline, the limestone tank valve is provided in the limestone tank pipeline, and the filtrate collection pipeline and the limestone tank pipeline are arranged to allow the dehydration filtrate to flow into the limestone tank by gravity, it is possible to omit a pump for transferring the dehydration filtrate to the limestone tank.

### ADVANTAGEOUS EFFECTS OF INVENTION

According to the present invention, it is possible to achieve space-saving and cost reduction of a flue gas desulfurization apparatus.

### BRIEF DESCRIPTION OF DRAWINGS

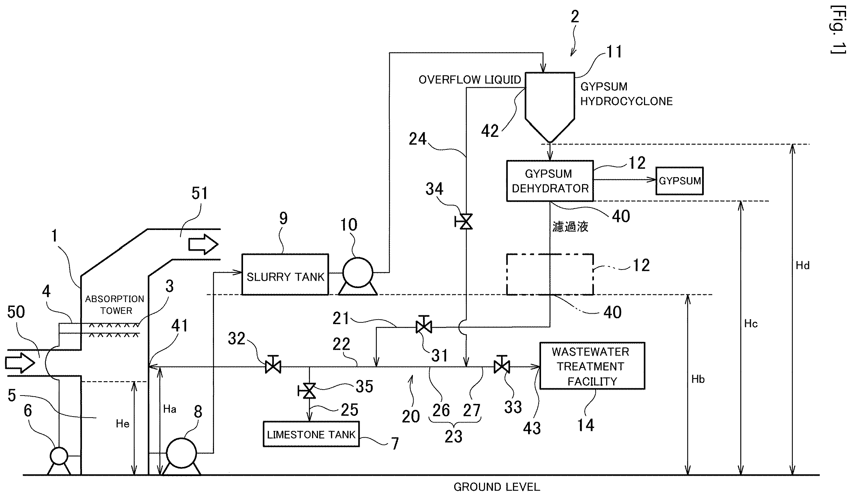

[Fig. 1] Fig. 1 is a diagram schematically illustrating a configuration of a flue gas desulfurization apparatus according to an embodiment of the present invention.

### DESCRIPTION OF EMBODIMENTS

A flue gas desulfurization apparatus according to an embodiment of the present invention is described with reference to Fig. 1.

The flue gas desulfurization apparatus of this embodiment is a wet limestone -gypsum flue gas desulfurization apparatus that removes sulfur oxides, which are generated in a thermal power plant or the like, from exhaust gas containing the sulfur oxides and includes an absorption tower 1 into which the exhaust gas containing the sulfur oxides is guided and a separation device 2 that separates absorption liquid into gypsum and dehydration filtrate (filtrated liquid).

The absorption tower 1 is provided with an entrance duct 50, and the exhaust gas from a boiler (not illustrated) is guided therein.

In the absorption tower 1, a spray header 4 including many spray nozzles 3 is provided, and the spray nozzles 3 spray the absorption liquid in the form of fine liquid droplets. With the sprayed absorption liquid being put in contact with the exhaust gas, the sulfur oxides in the exhaust gas are chemically removed at the surfaces of the absorption liquid droplets and discharged from an exhaust gas exit 51. The fine liquid droplets entrained with the flow of the exhaust gas are removed by a mist eliminator (not illustrated) provided at a top portion of the absorption tower 1. The temperature of the gas from which the fine liquid droplets are removed by the mist eliminator is raised as necessary by a reheating facility (not illustrated) provided downstream of the absorption tower 1, and the gas is discharged from a stack (not illustrated). Most of the liquid droplets sprayed from the spray nozzles 3 after absorbing the sulfur oxides fall into an absorption tower tank 5 provided at a bottom portion the absorption tower 1. The absorption liquid pooled in the absorption tower tank 5 is supplied to the spray header 4 (the spray nozzles 3) by an absorption liquid circulation pump 6. Additionally, the absorption tower tank 5 is provided with an air supply device (not illustrated) that supplies the pooled absorption liquid with air.

As expressed by the following chemical reaction formula, the sulfur oxides (SO₂) absorbed in the absorption liquid react with limestone (CaCO₃) contained in the absorption liquid to be then oxidized by the air supplied into the absorption tower tank 5 to become gypsum (CaSO₄·2H₂O). The limestone as an absorbent is reserved as limestone slurry in a limestone tank 7 and is supplied into the absorption tower tank 5 by a limestone slurry pump (not illustrated).

SO₂ + 2H₂O + CaCO₃ + 1/2O₂ → CaSO₄·2H₂O + CO₂

The absorption liquid (absorption liquid slurry) in the absorption tower tank 5 is drained from an absorption liquid outlet 44 of the absorption tower tank 5 by an absorption liquid drainage pump (a first pump) 8 to be transferred to a slurry tank 9 and then transferred to an absorption liquid inlet 45 of the separation device 2 from the slurry tank 9 by an absorption liquid slurry pump (second pump) 10. The separation device 2 is a device that collects the gypsum contained in the absorption liquid and includes a gypsum hydrocyclone 11 and a gypsum dehydrator 12. The gypsum hydrocyclone 11 is provided above the gypsum dehydrator 12. In general, a gypsum silo for reserving the separated gypsum is likely to be provided below the separation device 2, and accordingly, the gypsum dehydrator 12 is naturally provided above the gypsum silo. Note that, the gypsum dehydrator 12 of this embodiment is a belt filter. A vacuuming pump, a filtrated liquid receiver, and the like (not illustrated) are used as auxiliaries of the belt filter, and the filtrated liquid receiver is provided with a filtrate outlet 40 described later.

The absorption liquid transferred from the slurry tank 9 flows into the gypsum hydrocyclone 11 to increase the gypsum concentration by the gypsum hydrocyclone 11 and flows down into the gypsum dehydrator 12. That is, the gypsum hydrocyclone 11 separates the absorption liquid into high solid content concentration liquid and low solid content concentration liquid to allow the high solid content concentration liquid to flow down into the gypsum dehydrator 12 and allow the low solid content concentration liquid to be discharged as overflow liquid (dehydration filtrate).

The flue gas desulfurization apparatus is provided with first to fifth filtrate pipelines (pipes) 21 to 25 through which the dehydration filtrate flows. An upstream end (an upper end) of the first filtrate pipeline 21 is connected to the filtrate outlet 40 of the gypsum dehydrator 12, while a downstream end (a lower end) of the first filtrate pipeline 21 diverges into the second filtrate pipeline 22 connected to a filtrate inlet 41 of the absorption tower 1 and the third filtrate pipeline 23 connected to a filtrate inlet 43 of a wastewater treatment facility 14. That is, the first to third filtrate pipelines 21, 22, and 23 constitute a filtrate collection pipeline 20 through which the filtrate outlet 40 of the separation device 2, the filtrate inlet 41 of the absorption tower 1, and the filtrate inlet 43 of the wastewater treatment facility 14 communicate with each other. The dehydration filtrate flowing out of the filtrate outlet 40 of the separation device 2 (the gypsum dehydrator 12) flows into the absorption tower tank 5 through the filtrate collection pipeline 20 (the first and second filtrate pipelines 21 and 22) and the filtrate inlet 41, or is transferred out to a wastewater treatment facility 14 through the filtrate inlet 43. In the wastewater treatment facility 14, hazardous components in the dehydration filtrate are removed. An upstream end (an upper end) of the fourth filtrate pipeline 24 is connected to a low solid content concentration-side filtrate outlet 42 at a top portion of the gypsum hydrocyclone 11, while a downstream end (a lower end) of the fourth filtrate pipeline 24 is connected to the third filtrate pipeline 23. The dehydration filtrate (the overflow liquid) that is overflowed from the gypsum hydrocyclone 11 flows down the fourth filtrate pipeline 24 from the low solid content concentration-side filtrate outlet 42 to flow into the third filtrate pipeline 23 to converge with the dehydration filtrate from the separation device 2 and then flows into the absorption tower tank 5 from the filtrate inlet 41 or be transferred out to the wastewater treatment facility 14 from the filtrate inlet 43. That is, the second to fourth filtrate pipelines 22, 23, and 24 constitute the filtrate collection pipeline 20 through which the low solid content concentration-side filtrate outlet 42 of the gypsum hydrocyclone 11, the filtrate inlet 41 of the absorption tower 1, and the filtrate inlet 43 of the wastewater treatment facility 14 communicate with each other. An upstream end (an upper end) of the fifth filtrate pipeline 25 is connected to the second filtrate pipeline 22, while a downstream end (a lower end) of the fifth filtrate pipeline 25 is connected to the limestone tank 7. That is, the fifth filtrate pipeline 25 constitutes a limestone tank pipeline through which the filtrate collection pipeline 20 and the limestone tank 7 communicate with each other. Note that, in the following descriptions, in the third filtrate pipeline 23, the second filtrate pipeline 22 side of the portion converging with the fourth filtrate pipeline 24 is referred to as a collection-side pipeline 26, while the wastewater treatment facility 14 side of the converging portion is referred to as a discharge-side pipeline 27.

The first filtrate pipeline 21, the filtrate inlet 41 side of the diverging portion of the fifth filtrate pipeline 25 in the second filtrate pipeline 22, the discharge-side pipeline 27, the fourth filtrate pipeline 24, and the fifth filtrate pipeline 25 are respectively provided with first to fifth valves 31 to 35 capable of adjusting the flow rate of each pipeline. With the degree of opening of each valve 31 to 35 being adjusted (changed), the liquid amount of the dehydration filtrate (including the overflow liquid) to be transferred to each of the wastewater treatment facility 14, the limestone tank 7, and the absorption tower 1 can be adjusted. Note that, the second valve 32 constitutes an absorption tower-side valve provided at a pathway in the filtrate collection pipeline 20 toward the filtrate inlet 41 of the absorption tower 1 (the second filtrate pipeline 22 downstream of the diverging portion of the fifth filtrate pipeline 25), the third valve 33 constitutes a wastewater treatment-side valve provided at a pathway in the filtrate collection pipeline 20 toward the filtrate inlet 43 of the wastewater treatment facility 14 (the discharge-side pipeline 27), and the fifth valve 35 constitutes a limestone tank valve provided at the fifth filtrate pipeline 25.

A height above ground level Hc at which the gypsum dehydrator 12 is provided is higher than a height above ground level Hb at which the slurry tank 9 and the absorption liquid slurry pump 10 are provided, and a height above ground level Hd at which the gypsum hydrocyclone 11 is provided is higher than the height above ground level Hc at which the gypsum dehydrator 12 is provided. A height above ground level (≈Hc) of the filtrate outlet 40 of the gypsum dehydrator 12 is set higher than a height above ground level Ha of the filtrate inlet 41 of the absorption tower 1 and a height above ground level of the filtrate inlet 43 of the wastewater treatment facility 14, and the height above ground level Ha of the filtrate inlet 41 is set higher than a height above ground level He of an overflow surface of the absorption liquid in the absorption tower tank 5. Additionally, a height above ground level Hf of the absorption liquid outlet 44 of the absorption tower tank 5 is lower than the height above ground level He of an overflow surface of the absorption liquid in the absorption tower tank 5, and a height above ground level Hg of the absorption liquid inlet 45 of the gypsum hydrocyclone 11 is higher than the height above ground level Hd at which the gypsum hydrocyclone 11 is provided. Note that, Fig. 1 illustrates the height above ground levels based on a height above ground level (ground level) at which the absorption tower 1 is provided.

As illustrated in Fig. 1 with a dashed-two dotted line, the gypsum dehydrator 12 (the filtrate outlet 40) may be set at a height above ground level (≈Hb) substantially same as the height above ground level of the slurry tank 9 and the absorption liquid slurry pump 10. Additionally, the slurry tank 9 and the absorption liquid slurry pump 10 may be provided at a different height above ground level instead of being provided at the height above ground level Hb. The height above ground level at which the slurry tank 9 and the absorption liquid slurry pump 10 are provided may be anything as long as the height above ground level is within a range of higher than the height above ground level Ha of the filtrate inlet 41 of the absorption tower 1 and lower than the height above ground level Hg of the absorption liquid inlet 45 of the gypsum hydrocyclone 11, and is preferably equal to or lower than the height above ground level Hc at which the gypsum dehydrator 12 is provided.

The first and second filtrate pipelines 21 and 22 are arranged such that the upstream side is set at a height above ground level equal to or higher than the downstream side in the substantially entire area, and the fourth and fifth filtrate pipelines 24 and 25 are similarly arranged such that the upstream side is set at a height above ground level equal to or higher than the downstream side in the substantially entire area. Note that, in this embodiment, the substantially entire area of the second filtrate pipeline 22 and at least the collection-side pipeline 26 in the third filtrate pipeline 23 are arranged substantially horizontal to each other.

The dehydration filtrate flowing out of the filtrate outlet 40 of the separation device 2 can flow down the first filtrate pipeline 21 by gravity, diverge into the second filtrate pipeline 22 and the third filtrate pipeline 23, and flow into the filtrate inlet 41 of the absorption tower 1 and the filtrate inlet 43 of the wastewater treatment facility 14. Additionally, the overflow liquid (dehydration filtrate) flowing out of the low solid content concentration-side filtrate outlet 42 of the gypsum hydrocyclone 11 can flow down the fourth filtrate pipeline 24 by gravity, diverge into the collection-side pipeline 26 and the discharge-side pipeline 27, and flow into the filtrate inlet 41 of the absorption tower 1 and the filtrate inlet 43 of the wastewater treatment facility 14. Thus, the filtrate collection pipeline 20 is arranged to allow the dehydration filtrate flowing out of the filtrate outlet 40 of the separation device 2 to flow down by gravity and flow into the filtrate inlet 41 of the absorption tower 1 and the filtrate inlet 43 of the wastewater treatment facility 14 and also allow the dehydration filtrate flowing out of the low solid content concentration-side filtrate outlet 42 of the gypsum hydrocyclone 11 to flow down by gravity and flow into the filtrate inlet 41 of the absorption tower 1 and the filtrate inlet 43 of the wastewater treatment facility 14.

The limestone tank 7 is provided at a height above ground level lower than the second filtrate pipeline 22, and the dehydration filtrate flowing in the fifth filtrate pipeline 25 from the second filtrate pipeline 22 with the fifth valve 35 being opened flows down the fifth filtrate pipeline 25 by gravity to flow into the limestone tank 7.

According to this embodiment, the dehydration filtrate flowing out of the filtrate outlet 40 of the separation device 2 and the dehydration filtrate flowing out of the low solid content concentration-side filtrate outlet 42 of the gypsum hydrocyclone 11 flow down the filtrate collection pipeline 20 and flow into the filtrate inlet 41 of the absorption tower 1 to be reserved in the absorption tower tank 5 or flow into the filtrate inlet 43 of the wastewater treatment facility 14 to be given treatment. Since the height above ground level of the low solid content concentration-side filtrate outlet 42 of the gypsum hydrocyclone 11 and the height above ground level of the filtrate outlet 40 are both higher than the height above ground levels of the filtrate inlets 41 and 43, and the filtrate collection pipeline 20 is arranged such that the dehydration filtrate flowing out of the filtrate outlet 40 flows down by gravity to flow into the filtrate inlets 41 and 43, there is no need to provide a filtrate tank for reserving the dehydration filtrate, a filtrate pump for transferring the dehydration filtrate from the filtrate tank to the absorption tower tank 5, a transfer pump for transferring the dehydration filtrate to the wastewater treatment facility 14, and so on, and it is possible to achieve space-saving and cost reduction.

Additionally, with the absorption tower tank 5 serving as a reservoir tank of the dehydration filtrate, it is possible to adjust the water balance of the entire apparatus.

Moreover, since the filtrate collection pipeline 20 is arranged to allow the dehydration filtrate flowing out of the filtrate outlet 40 of the separation device 2 to flow down by gravity and flow into the filtrate inlet 41 of the absorption tower 1, it is required to set the height difference (Hc - Ha) between the filtrate outlet 40 of the separation device 2 and the filtrate inlet 41 of the absorption tower 1 great, and the height difference (Hg - Hf) for the transfer of the absorption liquid from the absorption liquid outlet 44 of the absorption tower 1 to the absorption liquid inlet 45 of the separation device 2 is accordingly increased. Since the absorption liquid is lifted up from a low position to a high position between the two positions having the increased height difference as described above, it is required to enlarge the pump for transferring the absorption liquid in order to stably transfer the absorption liquid to the separation device 2.

Regarding this point, in this embodiment, the slurry tank 9 is provided at the height above ground level Hb that is higher than the height above ground level Ha of the filtrate inlet 41 of the absorption tower 1 and lower than the height above ground level Hg of the absorption liquid inlet 45 of the separation device 2 to once lift up the absorption liquid from the absorption tower tank 5 to the slurry tank 9 by the absorption liquid drainage pump 8 and then further lift up the absorption liquid from the slurry tank 9 to the absorption liquid inlet 45 of the separation device 2 by the absorption liquid slurry pump 10. Thus, since the absorption liquid is lifted up gradually by arranging the slurry tank 9 at the position higher than the filtrate inlet 41 of the absorption tower 1, it is possible to stably transfer the absorption liquid to the separation device 2 while inhibiting the enlargement of the absorption liquid drainage pump 8 and the absorption liquid slurry pump 10 even in the case where the height difference for the transfer of the absorption liquid from the absorption tower 1 to the separation device 2 is increased.

Additionally, since the limestone tank 7 reserving the limestone slurry is provided, the filtrate collection pipeline 20 and the limestone tank 7 communicate with each other by the fifth filtrate pipeline 25, the fifth valve 35 is provided in the fifth filtrate pipeline 25, and the filtrate collection pipeline 20 and the fifth filtrate pipeline 25 are arranged to allow the dehydration filtrate to flow into the limestone tank 7 by gravity, it is possible to omit a pump for transferring the dehydration filtrate to the limestone tank 7.

Note that, the present invention is not limited to the embodiment and modification described above as an example and is changeable to various configurations other than the above-described embodiment and so on depending on a design or the like without departing from the technical idea of the present invention.

For example, although the example of using flowrate variable valves capable of increasing and decreasing the flowrate as the first to fifth valves 31 to 35 is described in the above embodiment, a part of or all the first to fifth valves 31 to 35 may be On-Off valves capable of only opening and closing (incapable of increasing and decreasing the flowrate). Additionally, although the example of using a belt filter as the gypsum dehydrator 12 is described in the above embodiment, the gypsum dehydrator 12 is not limited to the belt filter, and another gypsum dehydrator such as a centrifugal dehydrator or a decanter type dehydrator may be used. The vacuuming pump, the filtrated liquid receiver, and the like are unnecessary if a centrifugal dehydrator or a decanter type dehydrator is used.

### REFERENCE SIGNS LIST

- 1:: absorption tower
- 2:: separation device
- 5:: absorption tower tank
- 8:: absorption liquid drainage pump (first pump)
- 9:: slurry tank
- 10:: absorption liquid slurry pump (second pump)
- 11:: gypsum hydrocyclone
- 12:: gypsum dehydrator
- 14:: wastewater treatment facility
- 20:: filtrate collection pipeline
- 21 to 24:: first to fourth filtrate pipelines
- 25:: fifth filtrate pipeline (limestone tank pipeline)
- 26:: collection-side pipeline
- 27:: discharge-side pipeline
- 31 to 34:: first to fourth valves
- 35:: fifth valve (limestone tank valve)
- 40:: filtrate outlet of separation device
- 41:: filtrate inlet of absorption tower
- 42:: low solid content concentration-side filtrate outlet of gypsum hydrocyclone
- 43:: filtrate inlet of wastewater treatment facility
- 44:: absorption liquid outlet of absorption tower
- 45:: absorption liquid inlet of gypsum hydrocyclone

## Claims

1. A flue gas desulfurization apparatus that removes sulfur oxides from exhaust gas containing the sulfur oxides, **characterized in that** the flue gas desulfurization apparatus comprises:
an absorption tower that absorbs the sulfur oxides in the exhaust gas by absorption liquid and reserves the resultant absorption liquid in an absorption tower tank;
a slurry tank into which the absorption liquid drained from the absorption tower tank is transferred to flow by a first pump;
a separation device that separates the absorption liquid transferred from the slurry tank by a second pump into gypsum and dehydration filtrate; and
a filtrate collection pipeline through which a filtrate outlet of the separation device and a filtrate inlet of the absorption tower communicate with each other,
a height above ground level of the filtrate outlet is higher than a height above ground level of the filtrate inlet, and
the filtrate collection pipeline is arranged to allow the dehydration filtrate flowing out of the filtrate outlet to flow down by gravity and flow into the filtrate inlet.

2. A flue gas desulfurization apparatus that removes sulfur oxides from exhaust gas containing the sulfur oxides, **characterized in that** the flue gas desulfurization apparatus comprises:
an absorption tower that absorbs the sulfur oxides in the exhaust gas by absorption liquid and reserves the resultant absorption liquid in an absorption tower tank;
a slurry tank into which the absorption liquid drained from the absorption tower tank is transferred to flow by a first pump;
a separation device that separates the absorption liquid transferred from the slurry tank by a second pump into gypsum and dehydration filtrate;
a wastewater treatment facility that removes hazardous components in the dehydration filtrate;
a filtrate collection pipeline through which a filtrate outlet of the separation device, a filtrate inlet of the absorption tower, and a filtrate inlet of the wastewater treatment facility communicate with each other;
an absorption tower-side valve that is provided in a pathway in the filtrate collection pipeline toward the filtrate inlet of the absorption tower; and
a wastewater treatment-side valve that is provided in a pathway in the filtrate collection pipeline toward the filtrate inlet of the wastewater treatment facility,
a height above ground level of the filtrate outlet is higher than a height above ground level of the filtrate inlet of the absorption tower and a height above ground level of the filtrate inlet of the wastewater treatment facility, and
the filtrate collection pipeline is arranged to allow the dehydration filtrate flowing out of the filtrate outlet to flow down by gravity and flow into the filtrate inlet of the absorption tower and the filtrate inlet of the wastewater treatment facility.

3. A flue gas desulfurization apparatus that removes sulfur oxides from exhaust gas containing the sulfur oxides, **characterized in that** the flue gas desulfurization apparatus comprises:
an absorption tower that absorbs the sulfur oxides in the exhaust gas by absorption liquid and reserves the resultant absorption liquid in an absorption tower tank;
a slurry tank into which the absorption liquid drained from the absorption tower tank is transferred to flow by a first pump;
a gypsum hydrocyclone that separates the absorption liquid transferred from the slurry tank by a second pump into high solid content concentration liquid and low solid content concentration liquid;
a separation device that separates the high solid content concentration liquid discharged from the gypsum hydrocyclone into gypsum and dehydration filtrate;
a wastewater treatment facility that removes hazardous components in the dehydration filtrate;
a filtrate collection pipeline through which a low solid content concentration-side filtrate outlet of the gypsum hydrocyclone, a filtrate outlet of the separation device, a filtrate inlet of the absorption tower, and a filtrate inlet of the wastewater treatment facility communicate with each other;
an absorption tower-side valve that is provided in a pathway in the filtrate collection pipeline toward the filtrate inlet of the absorption tower; and
a wastewater treatment-side valve that is provided in a pathway in the filtrate collection pipeline toward the filtrate inlet of the wastewater treatment facility,
a height above ground level of the low solid content concentration-side filtrate outlet of the gypsum hydrocyclone and a height above ground level of the filtrate outlet of the separation device are higher than a height above ground level of the filtrate inlet of the absorption tower and a height above ground level of the filtrate inlet of the wastewater treatment facility, and
the filtrate collection pipeline is arranged to allow the dehydration filtrate flowing out of the filtrate outlet of the separation device to flow down by gravity and flow into the filtrate inlet of the absorption tower and the filtrate inlet of the wastewater treatment facility, and to allow the dehydration filtrate flowing out of the low solid content concentration-side filtrate outlet of the gypsum hydrocyclone to flow down by gravity and flow into the filtrate inlet of the absorption tower and the filtrate inlet of the wastewater treatment facility.
